# EUROPEAN PATENT SPECIFICATION

(11) **EP 1 556 561 B1**
(45) Date of publication and mention of the grant of the patent: **22.04.2009**
(21) Application number: 03779436.9
(22) Date of filing: 31.10.2003
(51) Int. Cl.: E04F 15/02, E04F 13/08, E04F 13/16, E04F 13/18, B44C 5/04, B44F 9/02, B44F 9/04

(54) **A SURFACE COVERING PANEL WITH PRINTED PATTERN**
FLÄCHENABDECKPLATTE MIT GEDRUCKTEM MUSTER
PANNEAU DE COUVERTURE DE SURFACE PRESENTANT UN MOTIF IMPRIME

(30) Priority: 01.11.2002 US 423096 P
(43) Date of publication of application: 27.07.2005
(73) Proprietor: Mannington Mills, Inc., Salem New Jersey 08079-0030 (US)
(72) Inventor: CHEN, Hao, A., Chaddsford, PA 19317 (US); EASTERDAY, Nathan, W., Newark, DE 19702 (US)
(74) Representative: Jackson, Martin Peter
(86) International application number: PCT/US2003/034741
(87) International publication number: WO 2004/042168

(56) References cited:
- EP-A- 1 108 529
- WO-A-01/48333
- WO-A-97/47834
- US-A- 4 092 199
- US-A- 4 675 212
- US-A- 5 961 903
- US-A- 6 114 008
- US-A1- 2001 028 945
- "Abrasion resistant decorative boards prodn. - by coating synthetic resin contg. mineral particles on a base and then applying free synthetic resin" WPI WORLD PATENT INF, XP002939825

## Description

The present invention relates to surface covering products, such as floor products, and methods of making the same. More particularly, the present invention relates to surface covering products which provide a unique appearance, such as highly detailed printed patterns on a textured surface.

There is a continuing effort in the surface covering industry to provide surface covering products, such as floor covering products, that have a more realistic appearance to better compete with other floor covering products that are available to consumers, such as ceramic, wood, stone, brick, marble, textile weave, and granite flooring, and the like. Various efforts have been made, such as those described in U.S. Patent No. 6,114,008 and U.S. Patent No. 5,961,903, wherein resilient vinyl floorings, for instance, were made having a very excellent natural appearance resembling the realistic appearance of true wood, stone, and the like. However, as with any industry, there is a continuing effort to improve upon successful products, such as the natural appearance products described in the above-identified patents.

WO-A-0,148,333 discloses a process for the manufacturing of surface elements which comprises a decorative upper layer and a supporting core. The upper side of the supporting core is provided with a décor, by for example printing, which décor is positioned after a predetermined fixed point on the supporting core. The upper side of the supporting core is provided with a protecting, at least partly translucent, wear layer by for example spray coating, roller coating, curtain coating and immersion coating or by being provided with one or more sheets of α-cellulose impregnated with thermosetting resin lacquer.

WO-A-97/47834 discloses a floor covering, consisting of hard floor panels provided with coupling parts which prevent the drifting apart of two coupled floor panels.

JP-A-54142289 discloses a method comprising a synthetic resin containing mineral particles having a new Moh's hardness of ≥ 10 and a particle size of 30-100 µm on the surface of a base and subsequently applying synthetic resin. Abrasion resistant decorative boards having good surface lustre are obtained.

US-A- 2001/028945 discloses a surface covering comprising at least one layer containing wear-resistant particles, such as aluminum oxide. Preferably, the wear-resistant particles are present in the outermost layer of the surface covering which is exposed to the environment. A method to improve wear and/or stain resistance to a surface covering is also disclosed and includes adding an effective amount of wear-resistant particles to a to coat layer or outermost layer of a surface covering. Also, layers of surface coverings having differences in gloss levels is also disclosed. Methods of making the surface covering are also disclosed.

US-A-4,092,199 discloses a decorative high pressure laminate having registered color and embossing produce by effecting simultaneous embossing and laminating using a three dimensional press plate acting against an overlay sheet containing high flow melamine resin and pigment. During the pressing operation the resin and pigment flows laterally from the high pressure areas to the low pressure areas with the result that the underlying print sheet is visible through the overlay sheet in the high pressure areas while the pigment in the overlay sheet in the low pressure areas mask the print sheet.

US-A-4,675,212 discloses a process for manufacturing surface coverings including the steps of printing a design on a base layer; overlying the printed base layer with a coating of substantially transparent or translucent material; printing a subsequent design using an ink including decorative particles on such transparent or translucent overlying material; and overlaying the ink printed design with a substantially transparent or translucent material prior to subsequent processing, such as heat curing to ensure an effectively fused product of the resulting surface covering.

EP-A-1,108,529 discloses a thermoplastic laminate plank wherein the thermoplastic laminate plank comprises a core, a print layer, and optionally an overlay. The core comprises at least one thermoplastic material and has a top surface and bottom surface wherein a print layer is affixed to the top surface of the core and an overlay layer is affixed to the top surface of the print layer. Optionally, an underlay layer can be located and affixed between the bottom surface of the print layer and the top surface of the core. In addition, a method of making the thermoplastic laminate plank is further described which involves extruding at least one thermoplastic material into the shape of the core and affixing a laminate on the core, wherein the laminate comprises an overlay affixed to the top surface of the print layer and optionally an underlay layer affixed to the bottom surface of the print layer.

Accordingly, there is a need for surface coverings such as surface covering panels, having unique appearances not previously available and to further provide surface coverings that have even a more realistic, "natural look" or appearance of various commercially available natural products, such as hard wood surfaces, and the like.

One current approach to making floor covering with the "natural" appearance of tile or stone, for instance, involves the electronic registration of printed paper to an embossed plate and the alignment of the subsequent embossed panel to a cutting blade. The printed paper is placed over a rigid substrate which adds structural integrity to the print. The paper and substrate are aligned with electronic sensors in both the machine and cross machine directions with the engraved pattern of an embossed plate inside a press. The press is then closed and the paper and substrate fused into a single panel containing the surface texturing. The panel is then cooled for a set amount of time and then cut into individual planks of set size. Prior to being cut into the planks, the panel is again aligned with electronic sensors in both the machine and cross machine directions relative to the cutting blades. The purpose of this alignment is to allow for the printed and embossed grout to be cut in a way that leaves enough printed and embossed grout that when two subsequent planks are connected, a uniform grout joint is created. To use this technique, a minimum of $10 million USD is required for the retrofit of current press lines or the development of a new press line.

Along with the cost of such operations, it has been found that development of new surface textures is time consuming, taking up to six months in the engraving of the pressing plate, the determination of proper paper specifications regarding dimensional stability during printing and saturation, and the development of printing rolls so that the final print design after being impregnated will be in register with the engraved press plate. Due to the long lead time for the development of new embossing patterns, the pattern must already show an economically viable reason for producing the material, such as large customer demand. Small production runs are impractical using this method. The inflexibility of this method of producing floor covering also leads to limited design flexibility such as number of colors available to be used in printing, the pattern repeat length, and printing resolution of the gravure printing process.

Even if the above issues can be resolved, the registration tolerance of the finished product is so small that if the proper conditions during any of the preliminary steps is not properly maintained with accurate machine controls and operator attention, the print of the final product will not be aligned in register with the embossed regions of the plate. This not only produces a visual aberration but will make it impossible to cut the boards later in an assembly line fashion. Each panel would need to have the saw blades aligned prior to each panel being cut into individual planks.

Accordingly, there is a need for a surface covering with a "natural" appearance, which can be produced with a short lead time and has design flexibility to overcome these disadvantages. Such a product should have a good registration between a printed pattern and an embossed texture.

### SUMMARY OF THE PRESENT INVENTION

An object of the present invention is to provide a surface covering which has a simulated natural appearance of a hard wood surface or other natural surface.

Another object of the present invention is to provide a surface covering that is in register with the embossed or textured design.

A further object of the present invention is to provide a high resolution printed pattern on a surface covering panel.

A further object of the present invention is to provide a sharper, deeper, more defined and detailed textured design.

A further object of the present invention is to provide a sophisticated and delicate design, such as a mosaic with multiple colors, shades, and sizes which can include wood knots, distressed wood, and other variations found in natural surface products.

Additional objects and advantages of the present invention will be set forth in part in the description that follows, and in part will be apparent from the description, or may be learned by practice of the present invention. The objectives and other advantages of the present invention will be realized and attained by means of the elements and combinations particularly pointed out in the description and appended claims.

To achieve these and other advantages, according to one aspect of the invention there is provided a surface covering panel comprising:
at least one support layer with or without texturing; at least one base coating located on top of said support layer having a textured surface formed by mechanical embossing, at least one printed pattern located on said textured surface and in register with said textured surface; and at least one protective layer located on the printed pattern,
wherein said at least one base coating, having a thickness of from 0.03 mm (1 mil) to 0.8 mm (30 mils), is a polymeric coating and the printed pattern is applied to the base coating with a printer that prints the printed pattern directly onto said base coating, the printed pattern and textured surface are in register to within 1 mm or less, and
said protective layer has a top surface with a textured pattern that corresponds to said textured surface,
**characterised in that:**
said textured surface has an embossed depth of from about 0.03 mm (1 mil) to about 0.38 mm (15 mils), and
said printed pattern is applied after the textured surface is present on said base coating.
According to another aspect of the invention there is provided a method of making the surface covering panel of claim 1, wherein said method comprises applying at least one base coating having a thickness of from 0.03 mm (1 mil) to 0.8 mm (30 mils) onto a support surface, wherein said base coating is a polymeric coating;
forming a textured surface onto said base coating;
printing a pattern directly onto said base coating to form a printed pattern; applying at least one protective coating onto said printed pattern such that said protective coating has a top surface and a textured pattern that corresponds to said textured surface is present on said top surface; wherein said textured surface and said printed pattern are in register,
wherein
said textured surface is formed by mechanical embossing to form a textured surface with an embossed depth of from about 0.03 mm (1 mil) to about 0.38 mm (15 mils), and said printing comprises printing directly onto said textured surface to form a printed pattern such that the textured surface remains textured with embossments.

According to another aspect of the invention, there is provided a surface covering panel comprising:
at least one support layer with texturing formed by mechanical embossing, optionally at least one base coating located on top of said support layer; at least one printed pattern located on said support layer and in register with said texturing on said support layer; and at least one protective layer located on the printed pattern,
wherein said printed pattern is applied to the support layer with a printer that prints the printed pattern directly on said support layer, the printed pattern and textured surface of the support layer are in register to within about 1 mm or less, and said protective layer has a top surface, with a textured pattern that corresponds to said textured surface of said support layer,
**characterised in that:**
said support layer is a wood-based-substrate, comprises particle board, comprises a wood fibre board composite or comprises a high density fibre board,
said texturing of the support layer has an embossed depth of from about 0.03 mm (1 mil) to about 0.38 mm (15 mils), and
said printed pattern is applied after a textured surface is present on said support layer.

It is to be understood that both the foregoing general description and the following detailed description are exemplary and explanatory only and are intended to provide further explanation of the present invention, as claimed.

### BRIEF DESCRIPTION OF THE DRAWINGS

The accompanying drawings which are incorporated in and constitute a part of this application, illustrate various aspects of the present invention and together with the descriptions serve to explain the principals of the present invention.

The present invention will be described in greater detail with reference to the drawings in which:

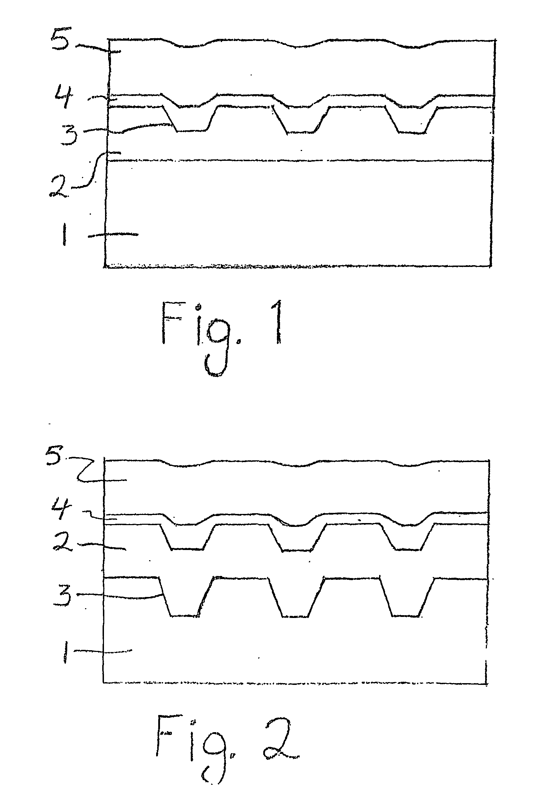

Figures 1-5 depict a fragmentary, cross-sectional view of various embodiments of the surface covering the present invention depicting the multiple layers in detail.

### DETAILED DESCRIPTION OF THE PRESENT INVENTION

In general, surface coverings and methods of making the same are provided by the present invention. The surface coverings of the present invention provide, in the preferred embodiment, a surface covering panel having a natural appearance, for instance, a hard wood surface appearance and thus provides surface coverings that have a realistic appearance as compared to other types of non-natural surface coverings. The surface covering panels of the present invention also, or in the alternative, in a preferred embodiment, have a surface texture which is in register with a printed pattern or design. For purposes of the present invention, surface covering includes, but is not limited to, flooring, such as modular tiles, in-laid floors, solid vinyl floors, resilient floors, homogeneous floors, cushioned floors, and the like; wallpaper, laminates, countertops, and other surfaces decorated by consumers. In a preferred embodiment, the surface covering panel is quite useful with laminate-type products.

In the present invention, in one embodiment, the surface covering has a backing layer or support surface. Preferably, the backing layer or support surface is at least one core. Examples of cores that can be used in the present invention include, but are not limited to, fiber board, particle board, recycled materials, agricultural based products, or other core materials used in the formation of laminate products, such as a number of layers of synthetic resin impregnated kraft paper and the like. The base layer or support layer can be a wood-based substrate. Other examples of suitable core material include, but are not limited to, polymer cores, such as thermoplastic or thermoset materials. Other examples include any surface that is capable of receiving a print layer and a base coat.

In the present invention, preferably, the surface covering panel has at least one backing layer or support surface, and at least one base coating located on the backing layer. The core(s) and/or the base coating(s) have a textured surface. This textured surface can be created by embossing the backing layer and/or the base coating on the backing layer. A printed pattern is located on the base coating and the printed pattern is preferably in register with the textured design. Preferably, at least one protective layer is located over the printed pattern.

As indicated, the backing layer, also known as the support surface or substrate layer, can be any conventional backing layer known to those skilled in the art. The thickness of the backing layer can be any suitable conventional thickness, such as from about 125 mils to about 480 mils or thicknesses above or below these ranges. Preferably, the thickness of a backing layer is from about 240 mils to about 320 mils, and more preferably about 310 mils.

Examples of suitable backing layers are flooring grade high density fiberboard (HDF) or medium density fiberboard (MDF) and other types of fiberboard and the like.

The base coating which is located on the backing layer is a polymeric coating (e.g., thermoplastic or thermoset). Preferably, the base coating is a polyester based acrylic coating. Specific examples of the base coating include coating 142-0690 from L/T Technologies. The thickness of the base coating is from 1 to 30 mils. In one embodiment, the base coating is optional, and the printed pattern can be located directly on the top surface of the backing layer.

Optionally, an adhesive base coat layer can be located on the top surface of the backing layer or core prior to the base coating described above. The adhesive base coat layer provides an improved surface for the base coat layer to be applied and adhered. The adhesive base coat layer can be any adhesive base coat layer capable of adhering to the top surface of the core or backing layer and provide a surface capable of retaining the base coating layer subsequently located above the adhesive base coat layer. Preferably, the adhesive base coat layer is a polyester based acrylic layer. A specific example of the adhesive base coat is product 122-0026-K from L/T Technologies. The adhesive base coat layer can have any suitable thickness such as from about 1 mil to about 10 mils (or thicknesses above or below this amount), and more preferably from about 2 mils to about 5 mils in thickness.

Furthermore, on the bottom surface of the core or backing layer can be located, as an option, a bottom balance layer. This bottom balance layer can further prevent any possible warping or curling of the panel. Any conventional bottom balance layer can be used, such as melamine impregnated kraft paper, polymeric coating, pre-pressed melamine kraft paper glued to the core or other layers that provide this balance function. A polymeric coating is preferred. A specific example of the polymeric coating bottom balance layer is polyester based acrylics, for instance, from L/T Technologies. The bottom balance layer further provides a moisture protection advantage. The bottom balance layer can have any suitable thickness, such as from about 1 mil to about 10 mils (or thicknesses above or below this amount), and more preferably from about 3 mils to about 5 mils. The bottom balance layer can be attached to the core by any means such as by an adhesive methods, such as, but not limited to, activation of melamine crosslinking during a high temperature and pressure pressing cycle, roll coating, air knife coating, spray coating and the like, and using an applied adhesive under high pressure on a preformed backer sheet.

The printed pattern or design located on the base coating can be any design or appearance. For instance, the printed design can have the appearance of a wood grain or can have the appearance of other natural surfaces. Also, the printed pattern can have the design of any other pattern desired by consumers. The printed pattern is preferably an inkjet printed pattern. In other words, the printed pattern is not a pattern printed on a paper or other substrate and then applied to the surface of the panel like conventional laminate manufacturing processes. In the present invention, the printed pattern is applied to the base coating or other surface with a printer which prints the pattern directly onto the base coating or other layer. Preferably, the printed pattern is an inkjet printed pattern. More preferably, the printed pattern is a digital inkjet printed pattern. When a textured design, such as an embossed design, is present on the backing layer and/or base coating, preferably, the printed pattern and the textured design are in register within 1 mm or less. Furthermore, the printed pattern is applied after the textured design is present and thus the printed pattern exists over the textured design which provides a very realistic appearance. Furthermore, preferably, the printed pattern that is applied to the base coating or other surface has a resolution of at least 100 dpi and more preferably a resolution of from about 150 dpi to about 750 dpi or more. This permits a quite detailed appearance when desired. The printed pattern can be a single printed pattern or a series of printed patterns depending upon the ultimate appearance desired.

The digital print layer can have any thickness and preferably a thickness of from about 0.1 mil to about 10 mils or more, and more preferably from about 0.5 mil to about 3 mils. The digital print layer can typically be present on the panel in an amount of from about 1 g/m² to about 10 g/m² or more, and more preferably from about 4 to about 5 g/m² of ink present to form the digital print layer. Certainly, other amounts and thicknesses can be used depending upon desired uses.

In a preferred embodiment, at least one protective layer or coating is present over the printed surface covering panel to preferably protect the printed pattern or design. This protective coating can also be known as a wear layer topcoat. The protective layer can be any suitable material known for this purpose. Preferably, the protective layer is a radiation cured or thermally cured topcoat, such as epoxy acrylates, urethane acrylates, polyester acrylates, unsaturated polyester, or other reactive wear resistant polymers or other urethane containing layers. For instance, the top layer can be a hard thermoset UV-curable blend of acrylic or acrylate monomers having a glass transition temperature (Tg) of greater than 30°C.

Another example of a protective layer is a nano-composite topcoat layer. The nano-composite layer contains wear resistant particles such as aluminum oxide, silica or the like to provide a significantly improved resistance to wear. Preferably, the nano-composite layer is a nano-composite urethane topcoat layer, which contains an effective amount of aluminum oxide, silica or the like with an average particle size less then 1 micron, and more preferred between 20 and 200 nanometers, to provide wear resistance. Thus, the protective layer or coating can be one or more of the same or different layers and preferably has at least two layers. In one embodiment, one of the layers is a high gloss urethane topcoat layer which is the top most layer, and underneath the high gloss urethane topcoat layer is preferably the nano-composite urethane topcoat layer.

Preferably, the thickness of the protective layer can be any suitable thickness to adequately protect the printed pattern. Suitable thicknesses include from about 1 to about 10 mils or more. Preferably, the thickness of the protective layer is from about 0.5 to about 4 mils and, more preferably about 1 mil to 3 mils.

Other layers can be present in the surface covering panel, such as additional base coatings which are the same or different from the first base coating, additional protective layers, strengthening layers, reinforcement layers, and other layers, such as layers found in conventional laminate panels.

With respect to the surface covering panel, the panel can have any shape or size. Preferably, in one embodiment, the surface covering panel can have similar shapes and sizes to conventional laminate surface covering products. For instance, the surface covering panel in one embodiment can have a size of from about 4 inches to 70 inches in the machine direction and from about 4 inches to about 30 inches in the cross machine direction. Other sizes are possible depending on the production line used. The panel can have a total thickness of from about 0.2 to about 0.5 inch, (e.g., about 0.3 inch).

As indicated above, the surface covering panels of the present invention preferably have a textured design on the top surface of the backing layer or on the base coating which is located on the backing layer. Preferably, the textured design is on the base coating.

The surface covering panels or planks of the present invention can optionally have a tongue and/or groove design on the edges of the panels in order to install the panels to form a surface covering. The tongue and groove design can be a conventional non-mechanical locking system which can be connected by glue or other adhesives to the surface substrate and/or glued to each edge. Alternatively, the tongue and groove design can be a mechanical locking system designed for installation to form, for instance, a floating and/or glueless surface covering. Any interlocking system on the edges of the panels can be used in the present invention. Typically, if a tongue and groove design is used, two of the edges have a tongue design and the two remaining edges have a groove design.

Furthermore, in installing the floor, if a true grout look is desired, grout can be applied for purposes of cosmetic rather than structural reasons. Any standard grout or synthetic grout (e.g., acrylic, latex, or silicone) can be used for this purpose. In one advantage of the present invention, no grout or other cementitous under layer would be needed to hold the material to the floor.

In forming the products of the present invention, a core or other support surface is provided wherein a base coating is applied to the surface of the core. The textured design can then be created on the surface of the base coating. In the alternative, or in combination, a textured design can be created on the core prior to the application of the base coating. A printed pattern is then applied onto the base coating, which preferably is in register with any textured design present. At least one protective layer is then applied over the printed pattern to form the surface covering panel of the present invention.

In more detail, the support surface or core can be placed on a production line such as a conveyer belt wherein a base coating is applied onto the top surface of the core. The base coating can be applied by any standard application techniques used to apply a liquid onto the surface of a substrate such as by roll coating, spray coating, air knife, and the like. As an option, the support surface or core can be surface treated prior to the application of the base coating or the adhesive base coating if one is used. The surface treatment can be done in order to better promote adhesion of the adhesive base coat or the base coating. One way to surface treat the surface of the support surface or core is with a plasma jet. Other ways to surface treat include, but are not limited to, chemical and/or mechanical means such as, but not limited to, acid wash, solvent wash, sanding, wire screening or other surface roughening, and corona treatment. This surface treatment is particularly useful when the support surface or core is a cellulose-based surface such as a high density fiber board.

Generally, if a high density fiber board is used or other similar product, the boards will be cut to size in order to fit into the press used in the production line. The optional surface treatment can be done prior to or after any cutting of the boards used for the support surface or core.

As indicated, an adhesive base coat can be applied prior to the application of the base coating. If an adhesive base coat is applied, the application can be done using any standard application techniques used to apply a liquid onto the surface of a substrate such as by roll coating, spray coating, air knife, and the like. The thickness of the adhesive base coating, if used, can be from about 1 mil to about 10 mils or more, and more preferably from about 1 mil to about 3 mils. After the adhesive base coat is applied, the coating is dried or cured by standard conventional techniques, such as the use of an infrared heater oven or the like. A second coat or more coats of the adhesive base coat can be subsequently applied using the same techniques and/or the same coating thickness. Generally, if an infrared heater oven is used, the coating can be heated to above 40°C for 10 to 30 seconds or more (e.g., from about 10 seconds to about 15 seconds) to dry or cure the coating. The base coating can then be applied using the same techniques.

Once the base coating is applied onto the core, the base coating is subjected to a drying or curing process in order to harden the base coating. Conventional drying or curing techniques can be used such as IR heater systems, convection oven systems, or the like.

As indicated above, the core or support surface and/or the base coating once applied can receive a textured design. The textured design is applied by mechanical embossing. The texture design is preferably applied onto the surface of the core and/or base coating by the use of a platen press or (an embossed roll). The platen press is used, which has a textured design on the plate surface, which is used to press the core and base coating. When using a press to create the texture design, a silicone release agent can be used with the press in order to avoid any of the base coat from sticking to the hot press plate. The texture design can be any design desired, such as the texture found in natural appearance products such as hardwood flooring and the like. The preferred process which involves the use of a platen press with a texture design on the surface of the upper plate of the platen press preferably is an engraved steel plate and this platen press is capable of forming a textured design which has an embossed depth of at least 1 mil and preferably from about 3 mils to about 50 mils or more. The embossed depth can be such that the textured design is formed on the base coating layer alone or on the core alone or on both the base coating and into the core. In this step, the platen press preferably has the following parameters: a platen press pressure of from about 435 psi (30 bar) to about 2175 psi (150 bar) or more and more preferably from about 500 psi (35 bar) to about 1090 psi (75 bar). The platen press preferably provides a platen press temperature of from about 150°C to about 225°C or more, and more preferably from about 180°C to about 210°C. Preferably, the platen press at the above described processing conditions presses the product for a time of from about 6 seconds to about 30 seconds, and more preferably from about 12 seconds to about 18 seconds or a time sufficient to cause the embossing of the product.

Afterwards, the core containing the base coating receives a printed pattern or design. As indicated above, the printed pattern is applied with an ink printing technique which forms the printed pattern directly on the surface of the base coating. Preferably, the printed pattern is applied with the use of an inkjet printer and more preferably a digital inkjet printer. The printed pattern is preferably applied with the inkjet printer, which is preferably digital and is preferably in registered with the textured design, and more preferably in register within about 1mm or less. Digital printer is capable of working with four colors or more such as cyan, magenta, yellow, and black, and has the capability of providing a detailed printed pattern with a resolution of at least 100 dpi in both the machine direction and cross machine direction or more, and more preferably from about 150 dpi to about 750 dpi. A digital printer is also capable of working with UV curable ink, organic solvent based ink, and waterborne based ink systems. The choice of ink will determine the type of curing system used. UV curable inks generally use UV lamps for curing while waterborne and organic solvent based inks use an infrared lamp to cure. Certainly, other curing techniques can be used which are known to those skilled in the art.

Preferably, with respect to the printed pattern, the ink placement preferably has a tolerance of about ±0.05mm and a maximum position placement tolerance of ±0.1mm.

Once the printed pattern is applied onto the base coating, at least one protective layer is preferably applied onto the printed pattern. The application of the protective layer can be applied in any fashion wherein a liquid is applied onto the surface of a substrate such as with the use of a roll coater, air knife, or sprayer, and the like. Preferably, the surface coating would have equivalent abrasion resistance to the current laminate overlay. As indicated above, one or more protective layers can be applied on the base coating. For instance, a low gloss or other gloss level nano-composite layer can be used and applied with an air knife or other coating technique. This coating can be subsequently dried or cured prior to the application of a second protective coating which is preferably a high gloss urethane coating as described above. By using a two layer system with different glosses, a contrasting or dual gloss coating can be achieved. Each of these coating can fully coat the entire surface of the base coating. Optionally, one of the coatings can partially overlap the other protective coating to provide a visual contrasting gloss. The partial coating of one or both coatings is in register to the printed pattern to highlight or dull certain patterns. This is quite effective in "natural" appearing products, like stone ceramic, brick, and the like. Generally after each protective layer coating is applied, the coating will be dried or cured prior to the application of a subsequent coating.

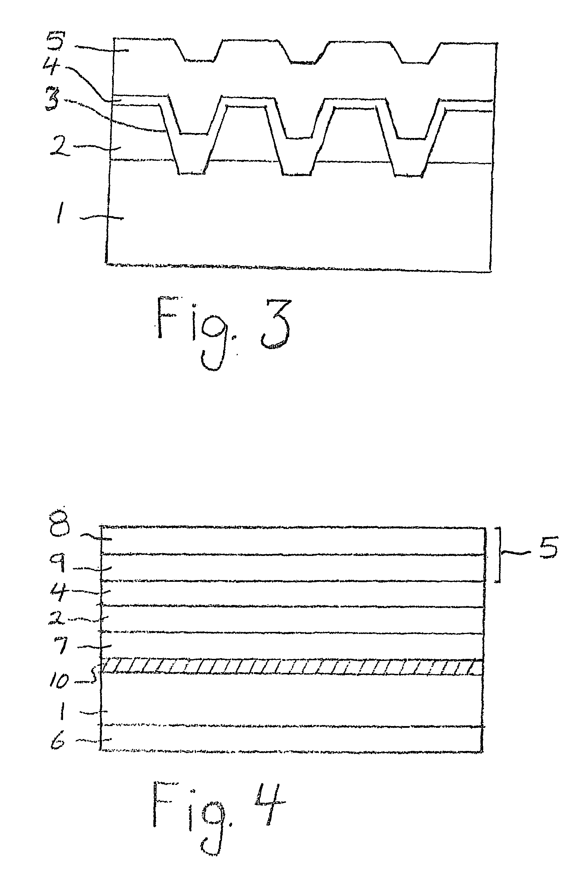

With respect to the figures, these figures are not to scale and are simply cross-sectional fragmentary views to show some of the embodiments of the present invention. With respect to Figure 1, this figure represents one embodiment wherein the backing layer or support surface or core shown as 1 is the bottom layer and a base coating designated as 2 is located above core 1. The texturing or embossing is represented as 3, which in this embodiment is textured on the surface of the base coating 2. At least one printed pattern 4 is located above the base coating and is printed over the textured surface. The printed pattern can mimic the texture created or fully fill in the textured embossed patterned surface. At least one protective layer 5 is located above the printed pattern 4. With respect to Figure 2, the numerals are the same as described above except in this embodiment, the core 1 has a textured surface which can then be reflected in the various coatings applied above such that the textured surface is eventually reflected on the top surface, i.e., the protective coating 5. Figure 3 again represents the same layers as set forth in Figure 1. In this embodiment, the textured surface 3 is a textured surface which is on and through the base coating 2 and into core 1. If there are any other layers located between core 1 and base coating 2, these layers would also be textured as well such as an adhesive base coat layer identified as 7 in Figure 4.

With respect to Figure 4, this figure represents the various other optional embodiments. Any one of these layers or all of the layers reflected in Figure 4 can be used. The numerals previously discussed above with respect to Figure 1 are the same layers in Figure 4. An optional surface treatment of the core 1 can be done and this is identified as 10 in Figure 4. An optional at least one adhesive base coat layer 7 can be located between core 1 and the base coating 2. The protective layer can comprise two or more layers such as a nano-composite urethane topcoat layer or other type layer identified as 9 along with a urethane topcoat layer identified as 8. The glosses of each of these layers can be the same or different depending upon desired appearance. A bottom balance layer identified as 6 can be also used and is located at the bottom surface of core 1.

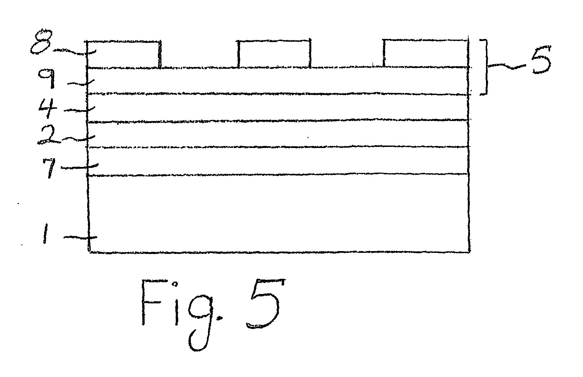

In Figure 5, the same layers are represented by the same numerals as discussed for the previous figures. Figure 5 shows an embodiment where the one of the protective layers 8 does not fully overlap protective layer 9 in order to create an optional contrasting gloss appearance. In Figures 4 and 5, embossing or textured surfaces are not shown to avoid any confusion but it is to be recognized that in Figures 4 and 5, any embossing as described earlier can be used such as the forming of a textured surface in core 1 or base coating 2 or both layers.

The surface covering panel of the present invention preferably has the following finished product properties. The abrasion resistance will be comparable to current laminate overlay. The product will be less sensitive to moisture, thus eliminating a common problem found among laminate flooring of cupping and crowning in the machine and cross machine directions. With digital inkjet printing, pattern changes of color, repeat length, and print resolution can be adjusted on a per run basis, adding much more flexibility than current methods. Smaller press sizes can be obtained, leading to cheaper press plates. This allows for a larger variety of textures to be developed cheaper and quicker than current methods.

With the present invention, the need to emboss in register is overcome by digitally printing on a pre-embossed surface. This is a significant advantage over conventional panels. In addition, the high resolution achieved by digitally printing is significantly better than conventional printing techniques such as with a rotogravure printing. Furthermore, the abrasion resistant layer which preferably contains a nano-composite material provides excellent abrasion resistance and wear. In addition, the surface of the panels of the present invention can be recoated with protective layers or other layers such as nano-composite layers to allow for rejuvenated appearance and wear resistance throughout the lifetime of the surface covering.

Other embodiments of the present invention will be apparent to those skilled in the art from consideration of the specification and practice of the invention disclosed herein. It is intended that the specification and examples be considered as exemplary only, with a true scope and spirit of the invention being indicated by the following claims.

## Claims

1. A surface covering panel comprising:
at least one support layer (1) with or without texturing; at least one base coating (2) located on top of said support layer (1) having a textured surface (3) formed by mechanical embossing, at least one printed pattern (4) located on said textured surface (3) and in register with said textured surface (3); and at least one protective layer (5) located on the printed pattern,
wherein said at least one base coating (2), having a thickness of from 0.03 mm (1 mil) to 0.8 mm (30 mils), is a polymeric coating and the printed pattern (4) is applied to the base coating (2) with a printer that prints the printed pattern (4) directly onto said base coating (2), the printed pattern (4) and textured surface (3) are in register to within 1 mm or less, and
said protective layer (5) has a top surface with a textured pattern that corresponds to said textured surface,
**characterised in that:**
said textured surface (3) has an embossed depth of from about 0.03 mm (1 mil) to about 0.38 mm (15 mils), and
said printed pattern (4) is applied after the textured surface (3) is present on said base coating (Z).

2. The surface covering panel of claim 1, wherein said printed pattern (4) is a digital printed pattern, preferably a digital inkjet printed pattern.

3. The surface covering panel of claim 1, wherein said printed pattern (4) and said textured surface are in register to within 0.05 mm.

4. The surface covering panel of claim 1, wherein said textured surface (3) has an embossed depth of from about 0.08 mm (3 mils) to about 0.38 mm (15 mils).

5. The surface covering panel of claim 1, wherein said printed pattern (4) has a wood, tile, brick, ceramic, textile weave or stone pattern design.

6. The surface covering panel of claim 1, wherein said printed pattern (4) has a resolution of at least about 100 dpi, preferably of from about 150 dpi to about 750 dpi.

7. The surface covering panel of claim 1, wherein said support layer (1): is a wood-based substrate, comprises a polymer-based layer, comprises particle board, comprises a wood and fiber board composite, or comprises a high density fiber board.

8. The surface covering panel of claim 1, wherein said at least one protective layer (5) comprises a urethane top coat layer.

9. A method of making the surface covering panel of claim 1, wherein said method comprises applying at least one base coating (2) having a thickness of from 0.03 mm (1 mil) to 0.8 mm (30 mils) onto a support surface (1), wherein said base coating is a polymeric coating;
forming a textured surface (3) onto said base coating;
printing a pattern (4) directly onto said base coating to form a printed pattern (4); applying at least one protective coating (5) onto said printed pattern (4) such that said protective coating (5) has a top surface and a textured pattern that corresponds to said textured surface (3) is present on said top surface; wherein said textured surface and said printed pattern are in register,
wherein
said textured surface (3) is formed by mechanical embossing (2) to form a textured surface with an embossed depth of from about 0.03 mm (1 mil) to about 0.38 mm (15 mils),
and said printing comprises printing directly onto said textured surface (3) to form a printed pattern (4) such that the textured surface (3) remains textured with embossments.

10. The method of claim 9, wherein said printing is accomplished with an inkjet printing system.

11. The method of claim 9, wherein said printing is accomplished with a digital inkjet printing system.

12. The method of claim 9, wherein said textured surface (3) is created with a platen press or an embossed roll.

13. The method of claim 9, wherein said printing is at a resolution of at least 100 dpi, preferably of about 150 dpi to about 750 dpi.

14. The method of claim 9, further comprising applying at least one adhesive base coating prior to applying at least one base coating (2) onto said support surface (1).

15. The method of claim 9 further comprising applying a bottom balance layer to the bottom surface of the said support surface (1).

16. The method of claim 9, wherein said support surface (1) is surface treated prior to the application of at least one base coating (2).

17. The method of claim 9, wherein at least two protective coatings (5) are applied.

18. The method of claim 17, wherein one, protective coating (5) is a nano-composite urethane topcoat layer and the other protective layer (5) is a urethane topcoat layer, wherein each protective layer (5) optionally has different gloss levels.

19. The method of claim 9 or the surface covering panel of claim 1, wherein said support layer (1) has a textured surface (3).

20. The surface covering panel according to claim 1, wherein:
said at least one support layer (1) has a textured surface;
said textured surface (3) of said at least one base coating (2) corresponds to said textured surface of said at least one support layer (1).

21. The surface covering panel of claim 1 further comprising at least one adhesive base coat located between said base coating (2) and said support layer (1).

22. The surface covering panel of claim 1, wherein said support layer (1) is a surface treated support layer.

23. The surface covering panel of claim 1, wherein said at least one protective layer (5) comprises two protective layers.

24. The surface covering panel of claim 23, wherein one of the protective layers (5) comprises a nano-composite urethane topcoat and the other protective layer (5) comprises a urethane topcoat layer.

25. The surface covering panel of claim 23, wherein one of said protective layers (5) comprises a low gloss nano-composite urethane topcoat layer and the other protective layer (5) comprises a high gloss urethane topcoat layer.

26. The surface covering panel of claim 25, wherein said high gloss urethane topcoat layer is located on top of said nano-composite urethane topcoat layer.

27. The surface covering panel of claim 1, further comprising a bottom balance layer located on the bottom of said at least one support layer.

28. A surface covering panel comprising:
at least one support layer (1) with texturing formed by mechanical embossing, optionally at least one base coating (2) located on top of said support layer (1); at least one printed pattern (4) located on said support layer (1) and in register with said texturing on said support layer (1); and at least one protective layer (5) located on the printed pattern,
wherein said printed pattern (4) is applied to the support layer (1) with a printer that prints the printed pattern (4) directly on said support layer, the printed pattern (4) and textured surface of the support layer (1) are in register to within about 1 mm or less, and said protective layer (5) has a top surface, with a textured pattern that corresponds to said textured surface of said support layer (1),
**characterised in that:**
said support layer (1) is a wood-based-substrate, comprises particle board, comprises a wood fibre board composite or comprises a high density fibre board,
said texturing of the support layer (1) has an embossed depth of from about 0.03 mm (1 mil) to about 0.38 mm (15 mils), and
said printed pattern is applied after a textured surface is present on said support layer.

## Patentansprüche

1. Flächenabdeckplatte, welche umfasst:
mindestens eine Trägerschicht (1) mit oder ohne Strukturierung; mindestens eine auf der Trägerschicht (1) angeordnete Grundbeschichtung (2) mit einer durch mechanisches Prägen gebildeten strukturierten Fläche (3), mindestens ein gedrucktes, sich auf der strukturierten Fläche (3) befindliches und mit der strukturierten Fläche (3) in Übereinstimmung angeordnetes Muster (4) und mindestens eine auf dem gedruckten Muster angeordnete Schutzschicht (5);
**dadurch gekennzeichnet, dass** die mindestens eine Grundbeschichtung (2) mit einer Dicke von 0,03 mm (1 mil) bis 0,8 mm (30 mil) eine Polymerbeschichtung ist und das gedruckte Muster (4) mit einem Drucker, der das gedruckte Muster (4) direkt auf die Grundbeschichtung (2) druckt, auf die Grundbeschichtung (2) aufgebracht wird, wobei das gedruckte Muster (4) und die strukturierte Fläche (3) bei einer Toleranz von 1 mm oder weniger in Übereinstimmung sind, und
die Schutzschicht (5) eine obere Fläche mit einem strukturierten Muster aufweist, das der strukturierten Fläche entspricht,
**dadurch gekennzeichnet, dass**
die strukturierte Fläche (3) eine Prägetiefe von etwa 0,03 mm (1 mil) bis etwa 0,38 mm (15 mil) aufweist und
das gedruckte Muster (4) aufgebracht wird, nachdem die strukturierte Fläche (3) auf der Grundbeschichtung (2) vorhanden ist.

2. Flächenabdeckplatte nach Anspruch 1, **dadurch gekennzeichnet, dass** das gedruckte Muster (4) ein digital gedrucktes Muster, vorzugsweise ein mit digitalem Tintenstrahldruck gedrucktes Muster ist

3. Flächenabdeckplatte nach Anspruch 1, **dadurch gekennzeichnet, dass** das gedruckte Muster (4) und die strukturierte Fläche bei einer Toleranz von 0,05 mm in Übereinstimmung sind.

4. Flächenabdeckplatte nach Anspruch 1, **dadurch gekennzeichnet, dass** die strukturierte Fläche (3) eine Prägetiefe von etwa 0,08 mm (3 mil) bis zu etwa 0,38 mm (15 mil) aufweist.

5. Flächenabdeckplatte nach Anspruch 1, **dadurch gekennzeichnet, dass** das gedruckte Muster (4) ein Holz-, Fliesen-, Ziegel-, Keramik-, Textilgewebe- oder Steinmusterdesign aufweist.

6. Flächenabdeckplatte nach Anspruch 1, **dadurch gekennzeichnet, dass** das gedruckte Muster (4) eine Auflösung von mindestens 100 dpi, vorzugsweise von etwa 150 dpi bis etwa 750 dpi aufweist.

7. Flächenabdeckplatte nach Anspruch 1, **dadurch gekennzeichnet, dass** die Trägerschicht (1) ein holzbasiertes Substrat ist, eine polymerbasierte Schicht umfasst, eine Spanplatte umfasst, einen Holz- und Faserplattenverbundstoff umfasst oder eine Faserplatte mit hoher Dichte umfasst.

8. Flächenabdeckplatte nach Anspruch 1, **dadurch gekennzeichnet, dass** die mindestens eine Schutzschicht (5) eine Urethan-Deckschicht umfasst.

9. Verfahren zum Herstellen der Flächenabdeckplatte nach Anspruch 1, **dadurch gekennzeichnet, dass** das Verfahren umfasst:
Aufbringen von mindestens einer Grundbeschichtung (2) mit einer Dicke von 0,03 mm (1 mil) bis 0,8 mm (30 mil) auf eine Trägerfläche (1), wobei die Grundbeschichtung eine Polymerbeschichtung ist;
Bilden einer strukturierten Fläche (3) auf der Grundbeschichtung;
Drucken eines Musters (4) direkt auf die Grundbeschichtung, um ein gedrucktes Muster (4) zu bilden; Aufbringen mindestens einer Schutzbeschichtung (5) auf das gedruckte Muster (4), so dass die Schutzbeschichtung (5) eine obere Fläche aufweist und ein der strukturierten Fläche (3) entsprechendes strukturiertes Muster auf der oberen Fläche vorhanden ist, wobei die strukturierte Fläche und das gedruckte Muster in Übereinstimmung sind,
**dadurch gekennzeichnet, dass**
die strukturierte Fläche (3) zum Bilden einer strukturierten Fläche mit einer Prägetiefe von etwa 0,03 mm (1 mil) bis zu etwa 0,38 mm (15 mil) durch mechanisches Prägen (2) gebildet wird
und das Drucken Drucken direkt auf die strukturierte Fläche (3) zum Bilden eines gedruckten Musters (4) umfasst, so dass die strukturierte Fläche (3) mit Prägungen strukturiert bleibt.

10. Verfahren nach Anspruch 9, **dadurch gekennzeichnet, dass** das Drucken mit einer Tintenstrahldruckanlage verwirklicht wird.

11. Verfahren nach Anspruch 9, **dadurch gekennzeichnet, dass** das Drucken mit einer digitalen Tintenstrahldruckanlage verwirklicht wird.

12. Verfahren nach Anspruch 9, **dadurch gekennzeichnet, dass** die strukturierte Fläche (3) mit einer Plattenpresse oder einer geprägten Walze erzeugt wird.

13. Verfahren nach Anspruch 9, **dadurch gekennzeichnet, dass** das Drucken bei einer Auflösung von mindestens 100 dpi, vorzugsweise von etwa 150 dpi bis etwa 750 dpi, erfolgt.

14. Verfahren nach Anspruch 9, welches weiterhin das Aufbringen von mindestens einer haftenden Grundbeschichtung vor dem Aufbringen von mindestens einer Grundbeschichtung (2) auf die Trägerfläche (1) umfasst.

15. Verfahren nach Anspruch 9, welches weiterhin das Aufbringen einer unteren Ausgleichsschicht auf die untere Fläche der Trägerfläche (1) umfasst.

16. Verfahren nach Anspruch 9, **dadurch gekennzeichnet, dass** die Trägerfläche (1) vor dem Aufbringen der mindestens einen Grundbeschichtung (2) oberflächenbehandelt wird.

17. Verfahren nach Anspruch 9, **dadurch gekennzeichnet, dass** mindestens zwei Schutzbeschichtungen (5) aufgebracht werden.

18. Verfahren nach Anspruch 17, **dadurch gekennzeichnet, dass** eine Schutzbeschichtung (5) eine Nanokomposit-Urethan-Deckschicht und die andere Schutzschicht (5) eine Urethan-Deckschicht ist, wobei jede Schutzschicht (5) optional unterschiedliche Glanzgrade aufweist.

19. Verfahren nach Anspruch 9 oder Flächenabdeckplatte nach Anspruch 1, **dadurch gekennzeichnet, dass** die Trägerschicht (1) eine strukturierte Fläche (3) aufweist.

20. Flächenabdeckplatte nach Anspruch 1, **dadurch gekennzeichnet, dass:**
die mindestens eine Trägerschicht (1) eine strukturierte Fläche aufweist;
die strukturierte Fläche (3) der mindestens einen Grundbeschichtung (2) der strukturierten Fläche der mindestens einen Trägerschicht (1) entspricht.

21. Flächenabdeckplatte nach Anspruch 1, welche weiterhin mindestens eine zwischen der Grundbeschichtung (2) und der Trägerschicht (1) angeordnete haftende Grundbeschichtung umfasst.

22. Flächenabdeckplatte nach Anspruch 1, **dadurch gekennzeichnet, dass** die Trägerschicht (1) eine oberflächenbehandelte Trägerschicht ist.

23. Flächenabdeckplatte nach Anspruch 1, **dadurch gekennzeichnet, dass** die mindestens eine Schutzschicht (5) zwei Schutzschichten umfasst.

24. Flächenabdeckplatte nach Anspruch 23, **dadurch gekennzeichnet, dass** eine der Schutzschichten (5) eine Nanokomposit-Urethan-Deckschicht umfasst und die andere Schutzschicht (5) eine Urethan-Deckschicht umfasst.

25. Flächenabdeckplatte nach Anspruch 23, **dadurch gekennzeichnet, dass** eine der Schutzschichten (5) einen Nanokomposit-Urethan-Deckschicht mit geringem Glanz und die andere Schutzschicht (5) eine Urethan-Deckschicht mit starkem Glanz umfasst.

26. Flächenabdeckplatte nach Anspruch 25, **dadurch gekennzeichnet, dass** die Urethan-Deckschicht mit starkem Glanz oben auf der Nanokomposit-Urethan-Deckschicht angeordnet ist.

27. Flächenabdeckplatte nach Anspruch 1, welche weiterhin eine unten an der mindestens einen Trägerschicht angeordnete untere Ausgleichsschicht umfasst.

28. Flächenabdeckplatte, welche umfasst:
mindestens eine Trägerschicht (1) mit durch mechanisches Prägen gebildeter Strukturierung, optional mindestens eine oben auf der Trägerschicht (1) angeordnete Grundbeschichtung (2); mindestens ein auf der Trägerschicht (1) angeordnetes gedrucktes Muster (4) in Übereinstimmung mit der Strukturierung auf der Trägerschicht (1); und mindestens eine auf dem gedruckten Muster angeordnete Schutzschicht (5),
wobei das gedruckte Muster (4) auf die Trägerschicht (1) mit einem Drucker, der das gedruckte Muster (4) direkt auf die Trägerschicht druckt, aufgebracht wird, das gedruckte Muster (4) und die strukturierte Fläche der Trägerschicht (1) bei einer Toleranz von etwa 1 mm oder weniger in Übereinstimmung sind und die Schutzschicht (5) eine obere Fläche mit einem strukturierten Muster aufweist, das der strukturierten Fläche der Trägerfläche (1) entspricht,
**dadurch gekennzeichnet, dass**
die Trägerschicht (1) ein holzbasiertes Substrat ist, eine Spanplatte umfasst, einen Holzfaserverbundstoff umfasst oder eine Faserplatte mit hoher Dichte umfasst,
wobei die Strukturierung der Trägerschicht (1) eine Prägetiefe von etwa 0,03 mm (1 mil) bis etwa 0,38 mm (15 mil) aufweist und das gedruckte Muster nach dem Vorhandensein einer strukturierten Fläche auf der Trägerschicht aufgebracht wird.

## Revendications

1. Panneau de revêtement de surface, comprenant :
au moins une couche de support (1) avec ou sans texturage ; au moins un revêtement de base (2) disposé sur ladite couche de support (1), comportant une surface texturée (3) formée par gaufrage mécanique, au moins un motif imprimé (4) disposé sur ladite surface texturée (3) et en alignement avec ladite surface texturée (3) ; et au moins une couche protectrice (5) disposée sur le motif imprimé,
dans lequel ledit revêtement de base au nombre d'au moins un (2), ayant une épaisseur comprise entre 0,03 mm (1 mil) et 0,8 mm (30 mils), est un revêtement polymère, et le motif imprimé (4) est appliqué au revêtement de base (2) avec une imprimante qui imprime le motif imprimé (4) directement sur ledit revêtement de base (2), le motif imprimé (4) et la surface texturée (3) étant en alignement avec une tolérance de 1 mm ou moins, et
ladite couche protectrice (5) comporte une surface supérieure avec un motif texturé qui correspond à ladite surface texturée,
**caractérisé en ce que :**
ladite surface texturée (3) a une profondeur de gaufrage comprise entre environ 0,03 mm (1 mil) et environ 0,38 mm (15 mils), et
ledit motif imprimé (4) est appliqué après que la surface texturée (3) soit présente, sur ledit revêtement de base (2).

2. Panneau de revêtement de surface selon la revendication 1, dans lequel ledit motif imprimé (4) est un motif imprimé numérique, de préférence un motif imprimé par jet d'encre numérique.

3. Panneau de revêtement de surface selon la revendication 1, dans lequel ledit motif imprimé (4) et ladite surface texturée sont en alignement avec une tolérance de 0,05 mm.

4. Panneau de revêtement de surface selon la revendication 1, dans lequel ladite surface texturée (3) a une profondeur de gaufrage comprise entre environ 0,08 mm (3 mils) et environ 0,38 mm (15 mils).

5. Panneau de revêtement de surface selon la revendication 1, dans lequel ledit motif imprimé (4) a une configuration de motif de bois, de tuile, de brique, de céramique, de tissage textile ou de pierre.

6. Panneau de revêtement de surface selon la revendication 1, dans lequel ledit motif imprimé (4) a une définition d'au moins environ 100 points par pouce (100 points par 2,54 cm), et, de préférence, comprise entre environ 150 points par pouce (150 points par 2,54 cm) et environ 750 points par pouce (750 points par 2,54 cm).

7. Panneau de revêtement de surface selon la revendication 1, dans lequel ladite couche de support (1) est un substrat à base de bois, comprend une couche à base de polymère, comprend une plaque de particules, comprend un composite de plaque de bois et de fibres, ou comprend une plaque de fibres de haute densité.

8. Panneau de revêtement de surface selon la revendication 1, dans lequel ladite couche protectrice au nombre d'au moins une (5) comprend une couche de revêtement supérieur en uréthane.

9. Procédé de réalisation du panneau de revêtement de surface selon la revendication 1, dans lequel ledit procédé comprend l'application d'au moins un revêtement de base (2) ayant une épaisseur comprise entre 0,03 mm (1 mil) et 0,8 mm (30 mils) sur une surface de support (1), ledit revêtement de base étant un revêtement polymère ;
la formation d'une surface texturée (3) sur ledit revêtement de base ;
l'impression d'un motif (4) directement sur ledit revêtement de base de façon à former un motif imprimé (4) ;
l'application d'au moins un revêtement protecteur (5) sur ledit motif imprimé (4) de telle sorte que ledit revêtement protecteur (5) comporte une surface supérieure et qu'un motif texturé qui correspond à ladite surface texturée (3) soit présent sur ladite surface supérieure ; ladite surface texturée et ledit motif imprimé étant en alignement,
dans lequel :
ladite surface texturée (3) est formée par gaufrage mécanique (2) de façon à former une surface texturée avec une profondeur de gaufrage comprise entre environ 0,03 mm (1 mil) et environ 0,38 mm (15 mils),
et ladite impression comprend une impression directement sur ladite surface texturée (3) de façon à former un motif imprimé (4) de telle sorte que la surface texturée (3) reste texturée avec des gaufrages.

10. Procédé selon la revendication 9, dans lequel ladite impression est accomplie avec un système d'impression à jet d'encre.

11. Procédé selon la revendication 9, dans lequel ladite impression est accomplie avec un système d'impression à jet d'encre numérique.

12. Procédé selon la revendication 9, dans lequel ladite surface texturée (3) est créée avec une presse à plateau ou un rouleau gaufré.

13. Procédé selon la revendication 9, dans lequel ladite impression est à une définition d'au moins 100 points par pouce (100 points par 2,54 cm), et, de préférence, comprise entre environ 150 points par pouce (150 points par 2,54 cm) et environ 750 points par pouce (750 points par 2,54 cm).

14. Procédé selon la revendication 9, comprenant de plus l'application d'au moins un revêtement de base adhésif avant l'application d'au moins un revêtement de base (2) sur ladite surface de support (1).

15. Procédé selon la revendication 9, comprenant de plus l'application d'une couche d'équilibrage inférieure sur la surface inférieure de ladite surface de support (1).

16. Procédé selon la revendication 9, dans lequel ladite surface de support (1) subit un traitement de surface avant l'application d'au moins un revêtement de base (2).

17. Procédé selon la revendication 9, dans lequel au moins deux revêtements protecteurs (5) sont appliqués.

18. Procédé selon la revendication 17, dans lequel un revêtement protecteur (5) est une couche de revêtement supérieur en uréthane à nano-composites et l'autre couche protectrice (5) est une couche de revêtement supérieur en uréthane, chaque couche protectrice (5) ayant de façon optionnelle des niveaux de brillant différents.

19. Procédé selon la revendication 9 ou panneau de revêtement de surface selon la revendication 1, dans lesquels ladite couche de support (1) a une surface texturée (3).

20. Panneau de revêtement de surface selon la revendication 1, dans lequel :
ladite couche de support au nombre d'au moins une (1) a une surface texturée ;
ladite surface texturée (3) dudit revêtement de base au nombre d'au moins un (2) correspond à ladite surface texturée de ladite couche de support au nombre d'au moins une (1).

21. Panneau de revêtement de surface selon la revendication 1, comprenant de plus au moins un revêtement de base adhésif disposé entre ledit revêtement de base (2) et ladite couche de support (1).

22. Panneau de revêtement de surface selon la revendication 1, dans lequel ladite couche de support (1) est une couche de support ayant subi un traitement de surface.

23. Panneau de revêtement de surface selon la revendication 1, dans lequel ladite couche protectrice au nombre d'au moins une (5) comprend deux couches protectrices.

24. Panneau de revêtement de surface selon la revendication 23, dans lequel l'une des couches protectrices (5) comprend une couche de revêtement supérieur en uréthane à nano-composites et l'autre couche protectrice (5) comprend une couche de revêtement supérieur en uréthane.

25. Panneau de revêtement de surface selon la revendication 23, dans lequel l'une desdites couches protectrices (5) comprend une couche de revêtement supérieur en uréthane à nano-composites à faible brillant et l'autre couche protectrice (5) comprend une couche de revêtement supérieur en uréthane à brillant élevé.

26. Panneau de revêtement de surface selon la revendication 25, dans lequel ladite couche de revêtement supérieur en uréthane à brillant élevé est disposée sur ladite couche de revêtement supérieur en uréthane à nano-composites.

27. Panneau de revêtement de surface selon la revendication 1, comprenant de plus une couche d'équilibrage inférieure disposée sur le bas de ladite surface de support au nombre d'au moins une.

28. Panneau de revêtement de surface, comprenant :
au moins une couche de support (1) avec un texturage formé par gaufrage mécanique ; de façon optionnelle, au moins un revêtement de base (2) disposé sur ladite couche de support (1) ; au moins un motif imprimé (4) disposé sur ladite couche de support (1) et en alignement avec ledit texturage sur ladite couche de support (1) ; et au moins une couche protectrice (5) disposée sur le motif imprimé,
dans lequel ledit motif imprimé (4) est appliqué à la couche de support (1) avec une imprimante qui imprime le motif imprimé (4) directement sur ladite couche de support, le motif imprimé (4) et la surface texturée de la couche de support (1) étant en alignement avec une tolérance d'environ 1 mm ou moins, et ladite couche protectrice (5) comportant une surface supérieure, avec un motif texturé qui correspond à ladite surface texturée de ladite couche de support (1),
**caractérisé en ce que :**
ladite couche de support (1) est un substrat à base de bois, comprend une plaque de particules, comprend un composite de plaque de fibres et de bois ou comprend une plaque de fibres de haute densité,
ledit texturage de la couche de support (1) a une profondeur de gaufrage comprise entre environ 0,03 mm (1 mil) et environ 0,38 mm (15 mils), et
ledit motif imprimé est appliqué après qu'une surface texturée soit présente sur ladite couche de support.
